Europäisches Patentamt

European Patent Office

Office européen des brevets

(11) Veröffentlichungsnummer: **0 063 370**
**A2**

# (12) EUROPÄISCHE PATENTANMELDUNG

(21) Anmeldenummer: **82103226.5**

(22) Anmeldetag: **16.04.82**

(51) Int. Cl.³: **B 60 G 9/00**
**B 60 G 3/26, B 60 G 11/28**

(30) Priorität: **16.04.81 DE 3115611**

(43) Veröffentlichungstag der Anmeldung:
**27.10.82 Patentblatt 82/43**

(84) Benannte Vertragsstaaten:
**AT BE CH DE FR GB IT LI LU NL SE**

(71) Anmelder: **Roland Fahrzeugplanung und -Vertrieb
GmbH
Grubmühlerfeldstrasse 54
D-8035 Gauting 1(DE)**

(72) Erfinder: **Kobs, Helmut
Alpenstrasse 15
D-8960 Kempten(DE)**

(72) Erfinder: **Wimmer, Peter
Richard-Strauss-Strasse 27
D-8952 Marktoberdorf(DE)**

(74) Vertreter: **Patentanwälte Liedl, Nöth, Zeitler
Steinsdorfstrasse 21-22
D-8000 München 22(DE)**

(54) Radaufhängung für ein Kraftfahrzeug.

(57) Eine Radaufhängung für ein Kraftfahrzeug, insbesondere für ein allradgetriebenes und allradgelenktes Geländefahrzeug, bei der zur Radführung eine starre Schwinge (1), die in ihrer Mitte universalgelenkig am Fahrzeugaufbau (7) und an ihren Enden jeweils scharnierartig drehbar am Radträger (5) gelagert ist, aufweist. Bei dieser Radaufhängung fluchten die Achsen (13) der scharnierartigen Lagerung (2) jedes Schwingenendes und liegen im rechten Winkel zur Fahrzeuglängsachse (19) und die Schwinge (1) ist in ihrer Mitte außerhalb der Fluchtlinie (10) der Achsen (13) der Schwingenenden in der Weise in Fahrzeugquerrichtung festgelegt, daß kein Versatz der Schwinge (1) in Fahrzeugquerrichtung möglich ist.

FIG. 2

Radaufhängung für ein Kraftfahrzeug

Die Erfindung betrifft eine Radaufhängung für ein Kraftfahrzeug, insbesondere für ein allradgetriebenes und allradgelenktes Geländefahrzeug, bei der ein Radträger über Stoßdämpfer- und Federmittel am Fahrzeugaufbau bzw. -rahmen abgestützt ist und zur Radführung eine starre Schwinge, die in ihrer Mitte universalgelenkig am Fahrzeugaufbau bzw. -rahmen und an ihren Enden jeweils scharnierartig drehbar am Radträger gelagert ist, aufweist.

Eine derartige Radaufhängung ist aus der DE-OS 24 02 324 bekannt. Bei der bekannten Radaufhängung ist die Schwinge im Grundriß V-förmig ausgebildet und mit ihren Enden mit den Radträgern durch scharnierartige Gelenke verbunden, deren Achsen zur Wagenmitte schräg nach vorn verlaufen in der Weise, daß sie die durch das zentrale Lager der Schwinge gelegte zentrale Querebene jenseits der Radebene des jeweils gegenüberliegenden Rades schneiden. Durch diese Anordnung sollen Vorspur und Radsturz beim Einfedern in der Weise verändert werden, daß die übertragbare Seitenkraft erhöht wird.

Aufgabe der Erfindung ist es demgegenüber, eine Radaufhängung der eingangs genannten Art zu schaffen, bei der während des Ein- und Ausfederns Spurweite, Sturz und Vorspur der Räder konstant, d.h. unverändert, bleiben.

Diese Aufgabe wird erfindungsgemäß dadurch gelöst, daß die Achsen der scharnierartigen Lagerung jedes Schwingenendes fluchten und im rechten Winkel zur Fahrzeuglängsachse liegen und die Schwinge in ihrer Mitte außerhalb der Fluchtlinie der Achsen der Schwingenenden in der Weise in Fahrzeugquerrichtung festgelegt ist, daß kein Querversatz der Schwinge möglich ist und daß der Radträger ferner über einen Querlenker geführt ist, der gefedert am Kraftfahrzeugaufbau bzw. -rahmen angelenkt ist und radseitig über eine Abstandsausgleichseinrichtung,
die beim Ein- und Ausfedern die Abstandsänderung zwischen dem Radträger und der Pendelachse der Anlenkstelle des Querlenkers am
Kraftfahrzeugaufbau bzw. -rahmen ausgleicht, am Radträger angelenkt
ist.

Während bei der aus der DE-OS 24 02 324 bekannten Radaufhängung
die Vorspur, der Sturz und die Spurweite der Räder von der momentanen Achsbelastung abhängig sind und sich demzufolge über dem Federweg verändern, bleiben bei der Erfindung die Vorspur, der Sturz und
die Spurweite der Räder über den gesamten Federweg konstant.

Die Erfindung verbindet insbesondere im Hinblick auf die Geländegängigkeit des Fahrzeugs die Vorzüge der Starrachse und der Einzelradaufhängung in vorteilhafter Weise miteinander. Starrachsen weisen bekanntlich stets gleichbleibende Spur- und Sturzwerte der Räder über
den gesamten Federweg auf und wirken sich deshalb auf das Zugkraftvermögen der Räder positiv aus. Einzelradaufhängungen ermöglichen
bei gleichzeitig großer Bodenfreiheit und großen Einfederwegen der Räder eine Minimierung der erforderlichen Achseinbauhöhe und in der Folge eine verringerte Fahrzeug- sowie Schwerpunkthöhe.

Durch die Erfindung und insbesondere durch die Merkmale in den Unteransprüchen werden hohe Radzugkräfte im Gelände aufgrund der spur-
und sturzkonstanten Verbindung der Räder an jeder Achse, eine gesteigerte Hindernisüberwindungsfähigkeit aufgrund der großen Bodenfreiheit
und der großen Federwege, insbesondere auch in Einfederrichtung, ein
verbesserter Fahrkomfort bzw. weichere und stoßärmere Fahrzeugbewegungen bei einer Verwendung als militärischer Waffenträger infolge
der großen Federwege, sowie eine geringere Fahrzeug- und Schwerpunkthöhe und damit größere Kippsicherheit aufgrund der geringen Achseinbauhöhe erzielt.

10017

Die in der Erfindung beschriebene Radaufhängung eignet sich gleichermaßen für reine Lenk- und Antriebsachsen wie auch für Lenk-Triebachsen.

Da die vorzugsweise gekröpfte und vorzugsweise als Rohr ausgebildete Schwinge, welche die beiden als Achsfäuste ausgestalteten Radaufhängungen jeder Achse miteinander verbindet, als Verbundträger wirkt, kann man bei der Erfindung auch von einer "Verbundträgerachse" sprechen.

Anhand der beiliegenden Figuren, in denen Ausführungsbeispiele dargestellt sind, soll die Erfindung noch näher erläutert werden. Es zeigt:

Fig. 1        in teilweiser schnittbildlicher Darstellung ein Ausführungsbeispiel in statischer Lage;

Fig. 2        eine Draufsicht auf das Ausführungsbeispiel der Fig. 1;

Fig. 3        das in den Figuren 1 und 2 dargestellte Ausführungsbeispiel in einseitig voll ein- und ausgefedertem Zustand;

Fig. 4        das Ausführungsbeispiel der Figuren 1 und 2 in beidseitig voll eingefedertem Zustand;

Fig. 5        einen Schnitt längs der Schnittlinie A-A in der Fig. 1;

Fig. 6        einen Schnitt längs der Schnittlinie B-B in der Fig. 1;

Fig. 7        einen Schnitt längs der Schnittlinie C-C in der Fig. 4;

Fig. 8        in perspektivischer Darstellung ein weiteres Ausführungs-

10017

beispiel;

Fig. 9 ein Ausführungsbeispiel für eine Abstandsausgleichseinrichtung und

Fig. 10 ein Einzelteil der in der Fig. 9 gezeigten Abstandsausgleichseinrichtung.

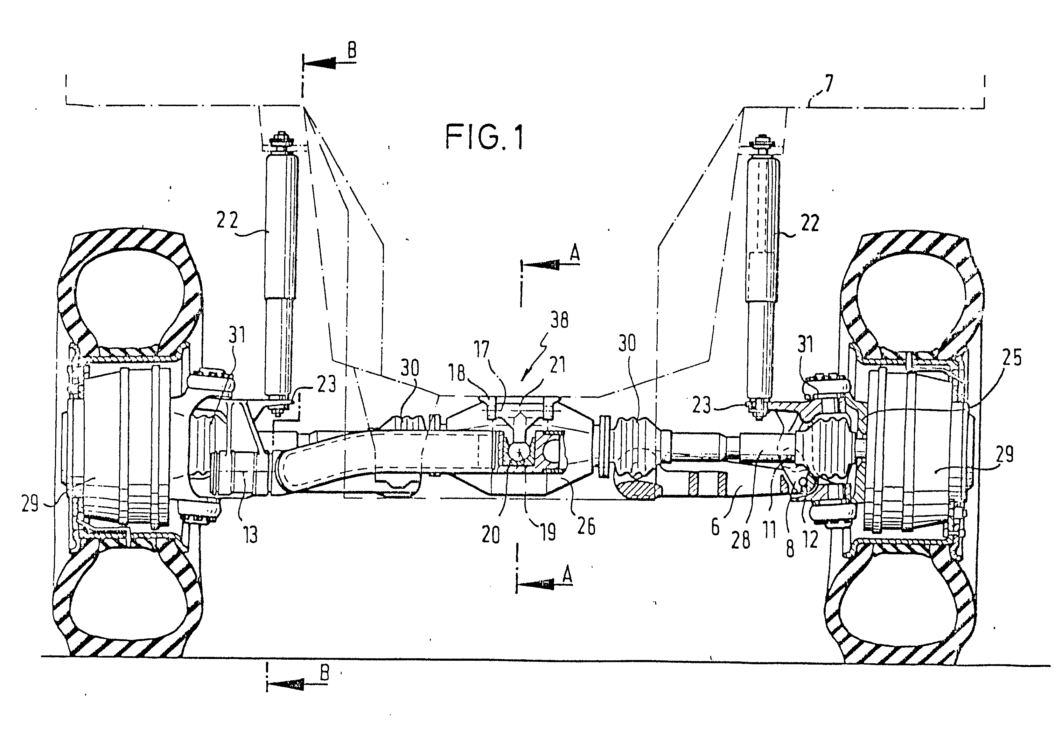

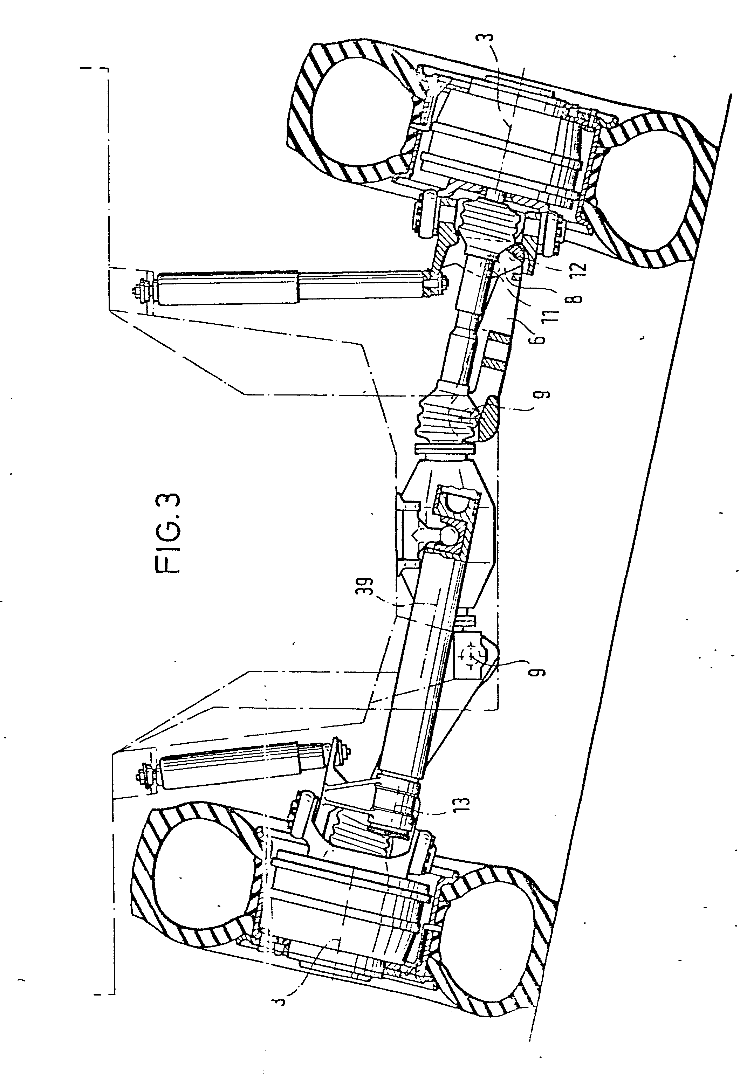

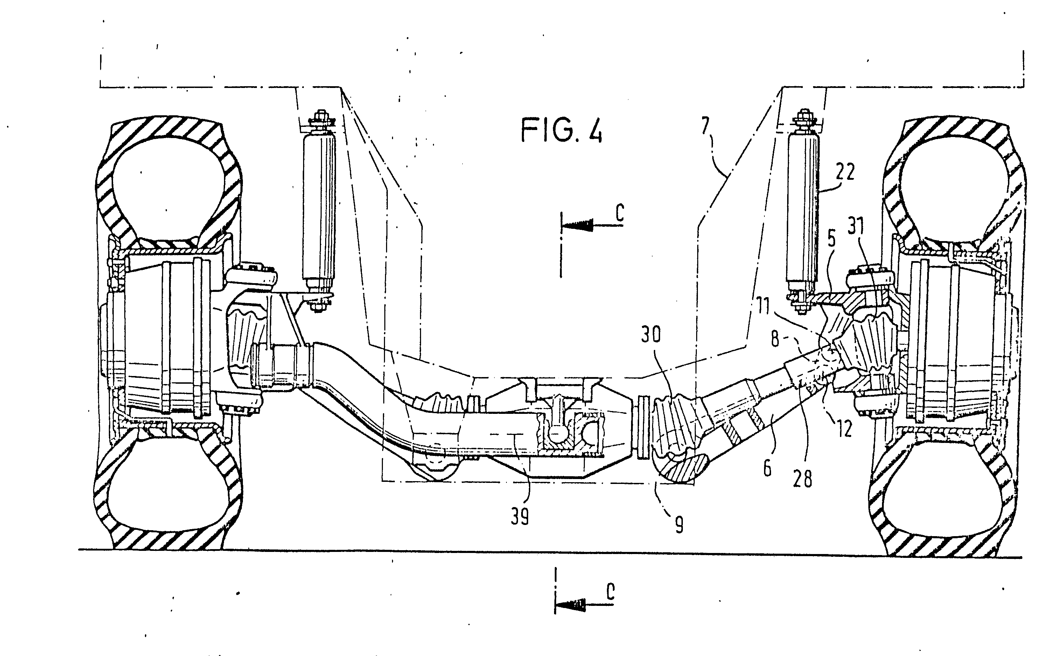

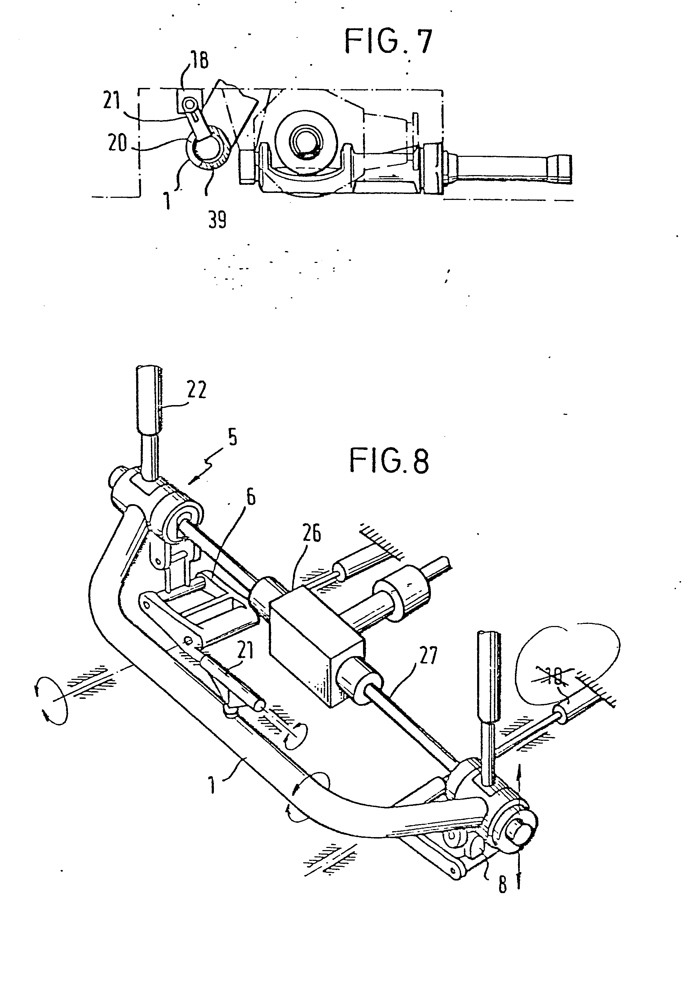

Bei dem in den Figuren 1 bis 7 dargestellten Ausführungsbeispiel einer
Radaufhängung ist ein von einer Achsfaust gebildeter Radträger 5 vorgesehen, der an einem durch strichpunktierte Linien schematisch dargestellten Fahrzeugaufbau 7 über einen Stoßdämpfer 22, welcher als
Teleskop-Schwingungsdämpfer ausgebildet sein kann, abgestützt ist. Als
Führungsmittel für den Radträger 5, insbesondere für eine vertikale
Ein- und Ausfederung über den gesamten Federweg hin, wie noch im
einzelnen erläutert wird, dient ein Querträger 6, der als einfaches
Querpendel ausgebildet ist. Dieser Querträger 6 ist mittels einer Anlenkstelle, die beim dargestellten Ausführungsbeispiel von den Lagern
36 und 37 gebildet wird, am Fahrzeugaufbau bzw. Fahrzeugrahmen 7
angelenkt und um eine Pendelachse 9 an dieser Anlenkstelle schwenkbar gelagert. Am Radträger 5 ist der Querlenker 6 über eine Abstandsausgleichseinrichtung, welche als Ausgleichshebel 8 ausgebildet
ist, angelenkt. Dieser Ausgleichshebel 8 ist, wie aus Fig. 6 zu ersehen ist, gabelförmig ausgebildet und ist in einer Achse 11 am Radträger 5 und in einer Achse 12 am Querlenker 6 schwenkbar gelagert.
Wie im einzelnen noch anhand der Figuren 3 und 4 erläutert wird, erfolgt durch diesen Ausgleichshebel 8 ein Ausgleich der Abstandsänderungen in der zur Fahrzeuglängsachse im rechten Winkel stehenden Vertikalebene zwischen der Pendelachse 9 und der Schwenkachse
11 des Radträgers 5 während des Ein-/Ausfedervorganges.

10017

Die Antriebskräfte für das Fahrzeug werden von einem am Fahrzeugaufbau befestigten Ausgleichsgetriebe 26 über Doppelgelenkwellen 27,
welche mit Schiebemuffen 28 ausgestattet sind, zu den Rädern 4 übertragen. Die Räder 4 können zusammen mit den in Gehäusen 29 vorhandenen Planetengetrieben und Bremsen einen bekannten Aufbau, wie er
beispielsweise bei allradgetriebenen Lastkraftwagen und Transportpanzern verwendet wird, aufweisen. Die Doppelgelenkwellen 27 besitzen
Gelenke 30 und 31, durch die ungehindert ein vertikaler Federungsweg
in Zusammenwirkung mit der Schiebemuffe 28 ermöglicht wird. Darüber
hinaus kann die Achsenkonstruktion als Lenkachse ausgebildet sein, wozu die Achsschenkel 25 schwenkbar an den als Achsfäusten ausgebildeten Radträgern 5 befestigt sind. Der Einfachheit halber sind die Lenkungsteile in den Figuren nicht gezeigt.

Wie aus den Figuren zu ersehen ist, sind die Doppelgelenkwellen 27
durch eine Ausnehmung im Radträger 5 hindurch geführt (Fig. 6) und
mit dem im Gehäuse 29 vorhandenen Planetengetriebe verbunden. Innerhalb dieser im Radträger 5 vorgesehenen Ausnehmung ist auch, wie aus
Fig. 6 zu ersehen ist, der gabelförmige Ausgleichshebel 8 am Radträger 5 angelenkt.

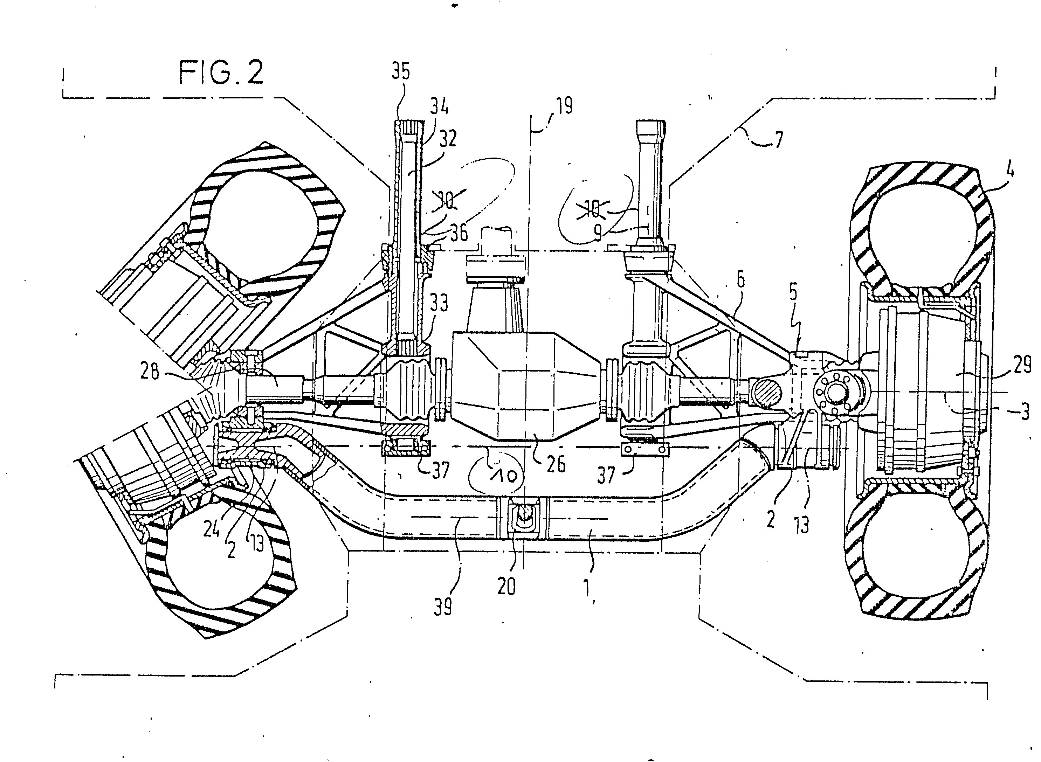

Die von den Lagern 36 und 37 gebildete Anlenkstelle des Querlenkers 6
am Kraftfahrzeugaufbau 7 nimmt das Torsionsfederelement, welches
insbesondere als Drehstab-Drehrohrfeder ausgebildet ist, auf. Diese
Drehstabfeder hat gegenüber anderen Federsystemen einen geringen
Platzbedarf. Natürlich ist es auch möglich, anstatt der Drehstabfeder
eine Schraubenfeder, die vorzugsweise zwischen dem Querlenker 6 und
dem Kraftfahrzeugaufbau 7 angeordnet wird, zu verwenden. Wie aus
der Fig. 2 zu ersehen ist, besitzt die Drehstab-Drehrohrfeder einen
Drehstab 32 mit einer Verbindungsstelle 33, an der der Drehstab mit
dem Querlenker 6 verbunden ist, sowie ein Drillrohr 34, in welches
sich der Drehstab erstreckt, und welches an einer Verbindungsstel-

10017

le 35 mit dem Drehstab 32 verbunden ist. Das Drillrohr 34 ist über ein Festlager 36 drehfest am Fahrzeugaufbau 7 gelagert.

Der Querlenker 6 besitzt eine relativ breite Lagerung und ist am Fahrzeugaufbau 7 mittels der beiden Lager 36 und 37 pendelnd um die Achse 9 gelagert. Wie aus den Figuren zu ersehen ist, ist für jeden Querlenker 6 eine eine Drehstab-Drehrohrfeder 32, 34 enthaltende Anlenkstelle vorhanden, die sich in Fahrzeuglängsrichtung und zu den beiden Seiten des Ausgleichsgetriebes 26 befindet.

Zur Führung des Radträgers 5 ist ferner ein vorzugsweise als Rohr ausgebildeter und vorzugsweise gekröpfter Verbundträger vorgesehen, der in seiner Mitte am Kraftfahrzeugaufbau 7 gelagert ist. Dieses zentrale Lager 38 ist als Universalgelenk ausgebildet, so daß Pendelbewegungen der Schwinge 1 um eine Fahrzeugquerachse 17, welche durch einen Dreieckslenker 21 bestimmt ist, sowie Schwenkbewegungen um die Fahrzeuglängsachse 19, welche durch ein Kugelgelenk 20 bestimmt ist, möglich sind. Das Universalgelenk kann auch durch ein anderes dieselben Freiheitsgrade aufweisendes Gelenk, beispielsweise kardanisches Lager gebildet sein. Der Dreieckslenker 17 ist hierzu in einem am Fahrzeugaufbau 7 befestigten Pendellager 18 gelagert. Das Kugelgelenk 20 ist an der als Rohr ausgebildeten Schwinge 1 vorgesehen. Das Universalgelenk 38 kann natürlich auch eine andere Konstruktion aufweisen, welche die vorstehenden Pendel- bzw. Schwenkbewegungen zuläßt, jedoch den Verbundträger in Fahrzeugquerrichtung festlegt, so daß kein Querversatz der Achse möglich ist.

Die beiden Enden 24 der Schwinge 1 sind jeweils in einem an den Radträger 5 angeformten scharnierartigen Lager 2 gelagert. Die Schwinge ist gekröpft, so daß die Achse 13, um welche die Schwinge im Lager 2 drehbar gelagert ist, parallel verläuft zu der Pendelachse 39, die bei unterschiedlichen Ein- bzw. Ausfederungszuständen unterschiedliche

10017

Lagen einnehmen kann. Wie aus den Figuren 1 und 2 zu ersehen ist, liegen die Pendelachse 39 und die Achse 13, um welche die Schwinge im scharnierartigen Lager 2 drehbar gelagert ist, parallel zueinander. Diese parallele Ausrichtung der im vorstehenden genannten Achsen 13 und 39 bleibt auch beibehalten bei unterschiedlichen Ein- bzw. Ausfederungszuständen, wie das aus den Figuren 3 und 4 zu ersehen ist. Beim Einschlagen der Räder 4 werden nur die Radachsen 3 verschwenkt, während die Achsen 13 bzw. deren Flüchtlinie 10 und die Pendelachse 39 der Schwinge bzw. des Verbundträgers 1 weiterhin parallel zueinander liegen.

Die Schwingenenden 24 sind in axialer Richtung fest in den scharnierartigen Lagern 2 gelagert, so daß Querkräfte übertragen werden können. Andererseits ist jedoch der für die Achsbewegungen erforderliche Freiheitsgrad aufgrund der universalgelenkigen Lagerung in der Mitte der Schwinge sowie durch die drehbare Lagerung der Schwingenenden in den Lagern 2 gewährleistet. Durch die starre Schwinge 1 wird in Zusammenwirkung mit dem Querlenker 6, der in Verbindung mit der Abstandsausgleichseinrichtung 8 einen vertikalen Federweg gewährleistet, auf diesem gesamten Federweg eine Spurweiten- und Sturzkonstanz gewährleistet. Die Brems- und Antriebsreaktionsmomente werden stets durch die Achsführungselemente, welche gebildet sind von dem Querlenker 6, der Abstandsausgleichseinrichtung 8 und der Anlenkstelle, die ihrerseits die Lager 36 und 37 umfaßt, aufgenommen. Brems- und Antriebsreaktionsmomente werden von der Schwinge 1 nicht aufgenommen.

Wie insbesondere aus den Figuren 1, 3 und 4 zu ersehen ist, wird durch die Achskonstruktion eine erhebliche Bodenfreiheit erzielt. Sowohl in der statischen Lage als auch im einseitig voll ein- bzw. ausgefederten Zustand sowie bereichsweise auch im beidseitig voll eingefederten Zustand liegen die einzelnen Bauteile der Achsenkonstruktion etwa in der gleichen horizontalen Ebene, so daß nicht nur eine Verringerung der Achseinbauhöhe und damit der Fahrzeughöhe, sondern auch eine Absenkung des Wannenbodens am Fahrzeugaufbau 7 im Achsbereich und zwischen den Achsen möglich ist. Damit ist trotz erhöhter Bodenfreiheit eine Verringerung der Fahrzeuggesamthöhe möglich. Darüber hinaus wird, wie beim gezeigten Ausführungsbeispiel, ein großer Federungsweg (Einfederweg etwa 250 mm und Ausfederweg 120 mm) ermöglicht. In der statischen Lage kann eine Bodenfreiheit von 450 mm im unmittelbaren Achsbereich erzielt werden. Im beidseitig voll eingefederten Zustand beträgt im Achsbereich die Bodenfreiheit noch 200 mm.

Beim dargestellten Ausführungsbeispiel beträgt die Spurweite 2090 mm, der Sturz $+ 1^{o}$, die Spreizung $5^{o}$, die Vorspur 0 mm und der Nachlauf $0^{o}$.

Wie aus den Figuren 3 und 4 zu ersehen ist, bleiben die Spurweite und der Sturz auch während des Ein- bzw. Ausfederns beibehalten. In der Fig. 3 ist das linke Rad einseitig voll eingefedert, während das rechte Rad einseitig voll ausgefedert ist. In der Fig. 4 ist die Achsenkonstruktion beidseitig voll eingefedert. In der voll eingefederten Stellung befindet sich die am Querlenker 6 angelenkte Achse 12 des Ausgleichshebels 8 in einer zur Achse 9 der Anlenkstelle 36, 37 des Querlenkers hin verschobenen Stellung, da der Abstand zwischen der Achse 11, mit der der Ausgleichshebel 8 am Radträger 5 angelenkt ist, von der Achse 9 der Anlenkstelle 36, 37 des Querträgers 6 am Kraftfahrzeugaufbau 7 größer ist als im ausgefederten Zustand (Fig. 3, rechtes Rad) oder im statischen Zustand (Fig. 1, rechtes Rad).

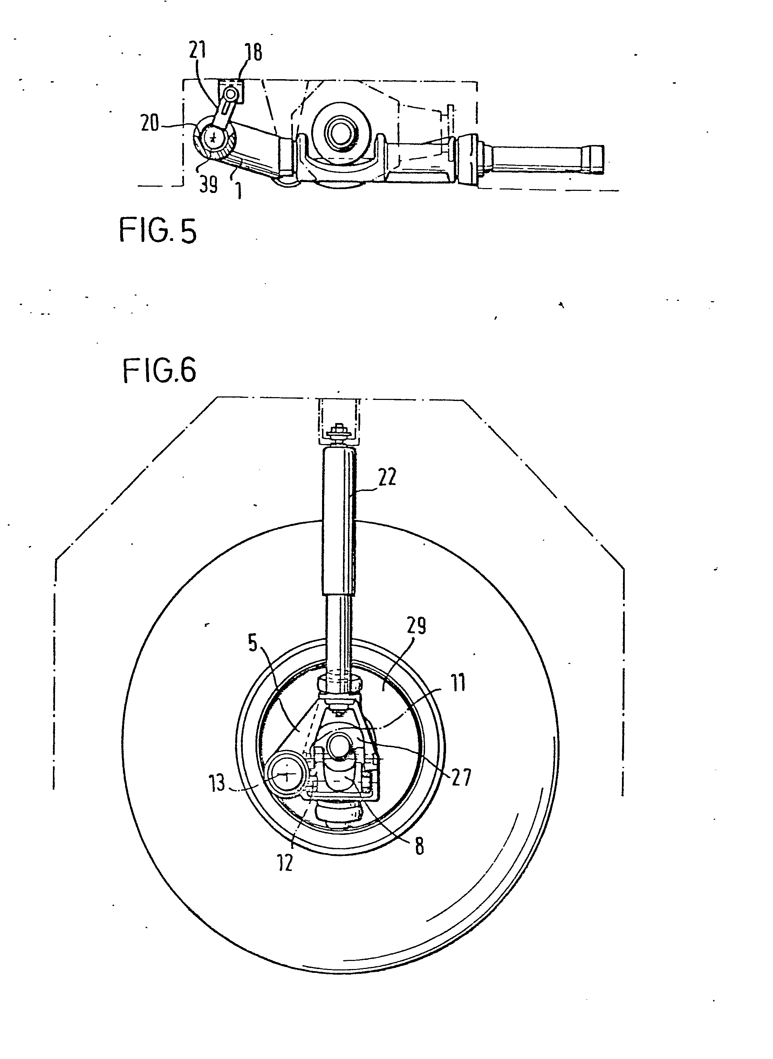

Aus den schnittbildlichen Darstellungen der Fig. 5 und 7 ist die Lage des Kugelgelenklagers 20 bzw. des Dreiecklenkers 21 im statischen Zustand (Fig. 5) und im voll eingefederten Zustand (Fig. 7) dargestellt.

Beim Ausführungsbeispiel der Figuren 1 bis 7 sind die Enden der Schwinge 1 außermittig zu den Radachsen gelagert.

In der Fig. 8 ist ein Ausführungsbeispiel schematisch dargestellt, bei dem die Enden der Schwinge 1 zentrisch in den Radträgern bzw. Achsfäusten gelagert sind. In dieser Figur sind die gleichwirkenden Bauteile mit den gleichen Bezugszeichen versehen wie in den Figuren 1. Die Funktionsweise ist ebenfalls die gleiche wie beim Ausführungsbeispiel der Figur 1.

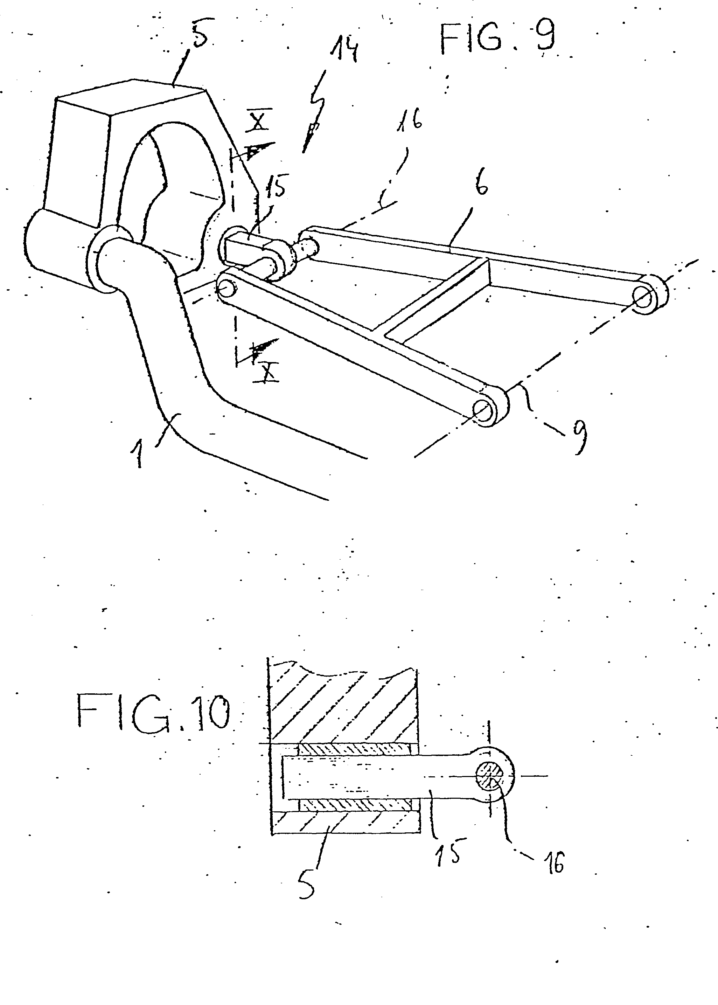

In den Figuren 9 und 10 ist eine andere Ausführungsform einer Ausgleichseinrichtung 14 dargestellt, bei der am Radträger 5 eine Führungseinrichtung für ein verschiebbares Profilstück 15 vorgesehen ist, an welchem der Querlenker 6 angelenkt ist. Das Profilstück 15 kann mehreckig ausgebildet sein, so daß es drehsicher in der Führung geführt ist und nur in Richtung quer zur Achse 9, in der der Querträger 6 am Kraftfahrzeugaufbau 7 angelenkt ist, verschiebbar ist. Der Querlenker 6 ist hierzu in einer Schwenkachse 16, welche parallel zur Achse 9 liegt, am verschiebbaren Profilstück 15 angelenkt.

10017

Roland Fahrzeugplanung und -Vertrieb GmbH

Grubmühlerfeldstraße 54, 8035 Gauting

Radaufhängung für ein Kraftfahrzeug

Patentansprüche:

1. Radaufhängung für ein Kraftfahrzeug, insbesondere für ein allradgetriebenes und allradgelenktes Geländefahrzeug, bei der ein Radträger über Stoßdämpfer- und Federmittel am Fahrzeugaufbau bzw. -rahmen abgestützt ist und zur Radführung eine starre Schwinge, die in ihrer Mitte universalgelenkig am Fahrzeugaufbau bzw. -rahmen und an ihren Enden jeweils scharnierartig drehbar am Radträger gelagert ist, aufweist, d a d u r c h  g e k e n n z e i c h n e t, daß die Achsen (13) der scharnierartigen Lagerung (2) jedes Schwingenendes fluchten und im rechten Winkel zur Fahrzeuglängsachse (19) liegen und die Schwinge (1) in ihrer Mitte außerhalb der Fluchtlinie (10) der Achsen (13) der Schwingenenden in der Weise in Fahrzeugquerrichtung festgelegt ist, daß kein Versatz der Schwinge (1) in Fahrzeugquerrichtung möglich ist, und daß der Radträger (5) ferner über einen Querlenker (6) geführt ist, der gefedert am Kraftfahrzeugaufbau bzw. -rahmen (7) angelenkt ist und radseitig über eine Abstandsausgleichseinrichtung (8; 14), die beim Ein-
und Ausfedern die Abstandsänderung zwischen dem Radträger (5) und
der Achse (9) der Anlenkstelle (36, 37) des Querlenkers (6) am Kraftfahrzeugaufbau bzw. -rahmen ausgleicht, am Radträger (5) angelenkt ist.

2. Radaufhängung nach Anspruch 1, dadurch gekennzeichnet,
daß die Abstandsausgleichseinrichtung als Ausgleichshebel (8) ausgebildet ist, dessen eines Ende am Radträger (5) und dessen anderes Ende
am Querlenker (6) in Schwenkachsen (11 und 12) angelenkt ist, die parallel zur Schwenkachse (9) der Anlenkstelle (36, 37) des Querlenkers
(6) am Kraftfahrzeugaufbau bzw. -rahmen (7) liegen.

3. Radaufhängung nach Anspruch 1, dadurch gekennzeichnet,
daß die Abstandsausgleichseinrichtung als im Radträger (5) quer zur
Schwenkachse (9) der Anlenkstelle (36, 37) des Querlenkers (6) am
Kraftfahrzeugaufbau bzw. -rahmen (7) verschiebbares Profilstück (15)
ausgebildet ist, an welchem der Querlenker (6) mit zu dieser Schwenkachse (9) paralleler Schwenkachse (16) angelenkt ist.

4. Radaufhängung nach einem der Ansprüche 1 bis 3, dadurch gekennzeichnet, daß der Querlenker (6) an seiner Anlenkstelle (36,
37) am Kraftfahrzeugaufbau bzw. -rahmen (7) gefedert gelagert ist.

5. Radaufhängung nach Anspruch 4, dadurch gekennzeichnet,
daß der Querlenker (6) über eine Drehstabfeder am Kraftfahrzeugaufbau bzw. -rahmen (7) gelagert ist.

6. Radaufhängung nach Anspruch 4, dadurch gekennzeichnet,
daß der Querlenker (6) über eine Schraubenfeder am Kraftfahrzeugaufbau bzw. -rahmen (7) gelagert ist.

10017

7. Radaufhängung nach einem der Ansprüche 1 bis 6, d a d u r c h  g e - k e n n z e i c h n e t , daß die Schwinge (1) fahrzeugseitig in einem Pendelbewegungen um eine Fahrzeugquerachse (17) zulassenden Pendellager (18) und schwingenseitig in einem Pendelbewegungen um die Fahrzeuglängsachse (19) zulassenden Lager (20) gelagert ist.

8. Radaufhängung nach Anspruch 7, d a d u r c h  g e k e n n z e i c h n e t , daß die Schwinge (1) fahrzeugseitig mittels eines Dreiecklenkers (21) im Pendellager (18) gelagert ist.

9. Radaufhängung nach Anspruch 7 oder 8, d a d u r c h  g e k e n n - z e i c h n e t , daß das schwingenseitige Lager (20) als Kugelgelenk ausgebildet ist.

10. Radaufhängung nach einem der Ansprüche 1 bis 9, d a d u r c h g e k e n n z e i c h n e t , daß die Schwinge (1) gekröpft ist.

11. Radaufhängung nach einem der Ansprüche 1 bis 10, d a d u r c h g e k e n n z e i c h n e t , daß die Schwinge (1) als Rohr ausgebildet ist.

12. Radaufhängung nach einem der Ansprüche 1 bis 11, d a d u r c h g e k e n n z e i c h n e t , daß die Brems- und Antriebsreaktionsmomente durch die Achsführungselemente (Querlenker 6 und Abstandsausgleicheinrichtung 8; 14) aufgenommen sind.

13. Radaufhängung nach einem der Ansprüche 1 bis 12, d a d u r c h g e k e n n z e i c h n e t , daß der Stoßdämpfer (22) mittels einer Anlenkstelle (23), die über den gesamten Federweg eine Schwingungsdämpfung zuläßt, an dem Radträger (5) angelenkt ist.

14. Radaufhängung nach einem der Ansprüche 1 bis 13, d a d u r c h g e k e n n z e i c h n e t , daß der Radträger (5) als Radfaust ausgebildet

10017

**0063370**

ist, an der der Stoßdämpfer (22) und über die Abstandsausgleichseinrichtung (8; 14) der Querlenker (6) angelenkt sind und die ein Schwingenende (24) aufnimmt und an der mittels Achsschenkel (25) das Rad (4)
befestigt ist.

15. Radaufhängung nach einem der Ansprüche 1 bis 14, dadurch
gekennzeichnet, daß der Querlenker (6) als einfaches Querpendel
ausgebildet ist.

16. Radaufhängung nach einem der Ansprüche 1 bis 15, gekennzeichnet durch ihren Einbau in einem geländegängigen Fahrzeug.

17. Radaufhängung nach einem der Ansprüche 1 bis 16, gekennzeichnet durch ihre Verwendung bei einer Lenkachse, bei der die
Achsschenkel (25) lenkbar an dem Radträger (5) befestigt sind.

18. Radaufhängung nach einem der Ansprüche 1 bis 16, gekennzeichnet durch ihre Verwendung bei einer Triebachse, bei der die
Achsschenkel (25) starr am Radträger (5) befestigt sind.

FIG.1

FIG.2

0063370

FIG.3

3

39

13

9

9

6 11

8 12

3

7/7

0063370

FIG. 4

FIG. 5

FIG. 6

0063370

FIG. 7

18
21
20
1
39

FIG.8

22
5
6
26
21
27
1
8

0063370

FIG. 9

5

14

16

15

6

X

X

1

9

FIG.10

5

15

16